# EUROPEAN PATENT APPLICATION

(11) **EP 2 995 668 A1**
(43) Date of publication of application: **16.03.2016**
(21) Application number: 15190300.2
(22) Date of filing: 19.12.2012
(51) Int. Cl.: C09K 5/04, F01K 25/06, F01K 25/08

(54) **USE OF COMPOSITIONS COMPRISING E-1,1,1,4,4,5,5,5-OCTAFLUORO-2-PENTENE IN POWER CYCLES**

(30) Priority: 21.12.2011 US 201161578372 P
(62) Divisional of application: 12806867.3
(71) Applicant: E. I. du Pont de Nemours and Company, Wilmington, DE 19898 (US)
(72) Inventor: Kontomaris, Konstantinos, Wilmington, Delaware 19808 (US)
(74) Representative: Matthews, Derek Peter

(57) **Abstract**

A method for converting heat from a heat source to mechanical energy is provided. The method comprises heating a working fluid comprising E-1,1,1,4,4,5,5,5-octafluoro-2-pentene (E-HFO-1438mzz) using heat supplied from the heat source; and expanding the heated working fluid to lower the pressure of the working fluid and generate mechanical energy as the pressure of the working fluid is lowered. Additionally, a power cycle apparatus containing a working fluid to convert heat to mechanical energy is provided. The apparatus contains a working fluid comprising E-HFO-1438mzz.

## Description

### CROSS REFERENCE(S) TO RELATED APPLICATION(S)

This application claims the priority benefit of U.S. Provisional Patent Application No. 61/578,372, filed December 21, 2011.

### FIELD OF THE INVENTION

This invention relates to methods and systems having utility in numerous applications, and in particular, in power cycles, such as organic Rankine cycles.

### BACKGROUND OF THE INVENTION

Low global warming potential working fluids are needed for power cycles such as organic Rankine cycles. Such materials must have low environmental impact, as measured by low global warming potential and low or zero ozone depletion potential.

### SUMMARY OF THE INVENTION

The present invention involves the compound E-1,1,1,4,4,5,5,5-octafluoro-2-pentene (i.e., E-HFO-1438mzz), either alone or in combination with one or more other compounds as described in detail herein.

In accordance with this invention, a method is provided for converting heat from a heat source to mechanical energy. The method comprises heating a working fluid comprising E-1,1,1,4,4,5,5,5-octafluoro-2-pentene (E-HFO-1438mzz) using heat supplied from a heat source; and expanding the heated working fluid to lower the pressure of the working fluid and generate mechanical energy as the pressure of the working fluid is lowered.

In accordance with this invention, a power cycle apparatus containing a working fluid to convert heat to mechanical energy is provided. The apparatus contains a working fluid comprising E-HFO-1438mzz.

### BRIEF DESCRIPTION OF THE DRAWINGS

FIG. 1 is a block diagram of a heat source and an organic Rankine cycle system in direct heat exchange according to the present invention.
FIG. 2 is a block diagram of a heat source and an organic Rankine cycle system which uses a secondary loop configuration to provide heat from a heat source to a heat exchanger for conversion to mechanical energy according to the present invention.

### DETAILED DESCRIPTION OF PREFERRED EMBODIMENTS

Before addressing details of embodiments described below, some terms are defined or clarified.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100 year time horizon is commonly the value referenced.

Net cycle power output is the rate of mechanical work generation at the expander (e.g., a turbine) less the rate of mechanical work consumed by the compressor (e.g., a liquid pump).

Volumetric capacity for power generation is the net cycle power output per unit volume of working fluid (as measured at the conditions at the expander outlet) circulated through the power cycle (e.g., organic Rankine cycle).

Cycle efficiency (also referred to as thermal efficiency) is the net cycle power output divided by the rate at which heat is received by the working fluid during the heating stage of a power cycle (e.g., organic Rankine cycle).

Subcooling is the reduction of the temperature of a liquid below that liquid's saturation point for a given pressure. The saturation point is the temperature at which a vapor composition is completely condensed to a liquid (also referred to as the bubble point). But subcooling continues to cool the liquid to a lower temperature liquid at the given pressure. Subcool amount is the amount of cooling below the saturation temperature (in degrees) or how far below its saturation temperature a liquid composition is cooled.

Superheat is a term that defines how far above its saturation vapor temperature of a vapor composition is heated. Saturation vapor temperature is the temperature at which, if the composition is cooled, the first drop of liquid is formed, also referred to as the "dew point".

Temperature glide (sometimes referred to simply as "glide") is the absolute value of the difference between the starting and ending temperatures of a phase-change process by a refrigerant within a component of a refrigerant system, exclusive of any subcooling or superheating. This term may be used to describe condensation or evaporation of a near azeotrope or non-azeotropic composition. Average glide refers to the average of the glide in the evaporator and the glide in the condenser of a specific chiller system operating under a given set of conditions.

An azeotropic composition is a mixture of two or more different components which, when in liquid form under a given pressure, will boil at a substantially constant temperature, which temperature may be higher or lower than the boiling temperatures of the individual components, and which will provide a vapor composition essentially identical to the overall liquid composition undergoing boiling. (see, e.g., M. F. Doherty and M.F. Malone, Conceptual Design of Distillation Systems, McGraw-Hill (New York), 2001, 185-186, 351-359).

Accordingly, the essential features of an azeotropic composition are that at a given pressure, the boiling point of the liquid composition is fixed and that the composition of the vapor above the boiling composition is essentially that of the overall boiling liquid composition (i.e., no fractionation of the components of the liquid composition takes place). It is also recognized in the art that both the boiling point and the weight percentages of each component of the azeotropic composition may change when the azeotropic composition is subjected to boiling at different pressures. Thus, an azeotropic composition may be defined in terms of the unique relationship that exists among the components or in terms of the compositional ranges of the components or in terms of exact weight percentages of each component of the composition characterized by a fixed boiling point at a specified pressure.

For the purpose of this invention, an azeotrope-like composition means a composition that behaves substantially like an azeotropic composition (i.e., has constant boiling characteristics or a tendency not to fractionate upon boiling or evaporation). Hence, during boiling or evaporation, the vapor and liquid compositions, if they change at all, change only to a minimal or negligible extent. This is to be contrasted with non-azeotrope-like compositions in which during boiling or evaporation, the vapor and liquid compositions change to a substantial degree.

As used herein, the terms "comprises," "comprising," "includes," "including," "has," "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" is used to define a composition, method or apparatus that includes materials, steps, features, components, or elements, in addition to those literally disclosed provided that these additional included materials, steps, features, components, or elements do materially affect the basic and novel characteristic(s) of the claimed invention. The term 'consisting essentially of occupies a middle ground between "comprising" and 'consisting of.

Where applicants have defined an invention or a portion thereof with an open-ended term such as "comprising," it should be readily understood that (unless otherwise stated) the description should be interpreted to also describe such an invention using the terms "consisting essentially of" or "consisting of."

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the present invention, suitable methods and materials are described below. All publications, patent applications, patents, and other references mentioned herein are incorporated by reference in their entirety, unless a particular passage is cited. In case of conflict, the present specification, including definitions, will control. In addition, the materials, methods, and examples are illustrative only and not intended to be limiting.

E-1,1,1,4,4,5,5,5-octafluoro-2-pentene, also known as E-HFO-1438mzz, may be made by methods known in the art, such as described in PCT Patent Publication No. WO2009/079525 by reacting CF₃CF₂CCl₂CF₂CF₃ (CFC-41-10mca) with hydrogen in the presence of a dehalogenation catalyst to produce CF₃CF₂CCl=CFCF₃ (CFC-1419myx); reacting CFC-1419myx with hydrogen in the presence of a dehalogenation catalyst to produce CF₃CF₂C=CCF₃ (octafluoro-2-pentyne); and reacting octafluoro-2-pentyne, in a pressure vessel, with an hydrogenation catalyst to produce CF₃CF₂CH=CHCF₃ (1,1,1,4,4,5,5,5-octafluoro-2-pentene).

### Power cycle methods

A sub-critical organic Rankine cycle (ORC) is defined as a Rankine cycle in which the organic working fluid used in the cycle receives heat at a pressure lower than the critical pressure of the organic working fluid and the working fluid remains below its critical pressure throughout the entire cycle.

A trans-critical ORC is defined as a Rankine cycle in which the organic working fluid used in the cycle receives heat at a pressure higher than the critical pressure of the organic working fluid. In a trans-critical cycle, the working fluid is not at a pressure higher than its critical pressure throughout the entire cycle.

A super-critical power cycle is defined as a power cycle which operates at pressures higher than the critical pressure of the organic working fluid used in the cycle and involves the following steps: compression; heating; expansion; cooling.

In accordance with this invention, a method is provided for converting heat from a heat source to mechanical energy. The method comprises heating a working fluid using heat supplied from the heat source; and expanding the heated working fluid to lower the pressure of the working fluid and generate mechanical energy as the pressure of the working fluid is lowered. The method is characterized by using a working fluid comprising E-HFO-1438mzz.

The method of this invention is typically used in an organic Rankine power cycle. Heat available at relatively low temperatures compared to steam (inorganic) power cycles can be used to generate mechanical power through Rankine cycles using working fluids comprising E-HFO-1438mzz and optionally HFC-245eb (1,1,1,2,3-pentafluoropropane). In the method of this invention, working fluid comprising E-HFO-1438mzz and optionally HFC-245eb is compressed prior to being heated. Compression may be provided by a pump which pumps working fluid to a heat transfer unit (e.g., a heat exchanger or an evaporator) where heat from the heat source is used to heat the working fluid. The heated working fluid is then expanded, lowering its pressure. Mechanical energy is generated during the working fluid expansion using an expander. Examples of expanders include turbo or dynamic expanders, such as turbines, and positive displacement expanders, such as screw expanders, scroll expanders, and piston expanders. Examples of expanders also include rotary vane expanders (Musthafah b. Mohd. Tahir, Noboru Yamada, and Tetsuya Hoshino, International Journal of Civil and Environmental Engineering 2:1 2010).

Mechanical power can be used directly (e.g. to drive a compressor) or be converted to electrical power through the use of electrical power generators. In a power cycle where the working fluid is re-used, the expanded working fluid is cooled. Cooling may be accomplished in a working fluid cooling unit (e.g. a heat exchanger or a condenser). The cooled working fluid can then be used for repeated cycles (i.e., compression, heating, expansion, etc.). The same pump used for compression may be used for transferring the working fluid from the cooling stage.

In one embodiment, the method for converting heat to mechanical energy uses a working fluid comprising E-HFO-1438mzz and optionally HFC-245eb. Of note are working fluids that consist essentially of E-HFO-1438mzz and optionally HFC-245eb, wherein the amount of E-HFO-1438mzz is at least about 1 weight percent. Also of note are working fluid compositions consisting essentially of E-HFO-1438mzz. Of particular note are working fluids consisting essentially of E-HFO-1438mzz and HFC-245eb. Also of particular note are working fluids comprising from about 1 weight percent to about 99 weight percent E-HFO-1438mzz and from about 99 weight percent to about 1 weight percent HFC-245eb.

Of note for use in methods converting heat to mechanical energy are working fluids comprising E-HFO-1438mzz and HFC-245eb that are non-flammable. It is expected that certain compositions comprising E-HFO-1438mzz and HFC-245eb are non-flammable by standard test ASTM 681. Of particular note are compositions containing E-HFO-1438mzz and HFC-245eb with at least 35 weight percent E-HFO-1438mzz. Also of particular note are compositions containing E-HFO-1438mzz and HFC-245eb with at least 36 weight percent E-HFO-1438mzz. Also of particular note are compositions containing E-HFO-1438mzz and HFC-245eb with at least 37 weight percent E-HFO-1438mzz. Also of particular note are compositions containing E-HFO-1438mzz and HFC-245eb with at least 38 weight percent E-HFO-1438mzz. Also of particular note are compositions containing E-HFO-1438mzz and HFC-245eb at least 39 weight percent E-HFO-1438mzz. Also of particular note are compositions containing E-HFO-1438mzz and HFC-245eb at least 40 weight percent E-HFO-1438mzz. Also of particular note are compositions containing from about 35 to about 95 weight percent E-HFO-1438mzz and from about 5 to about 65 weight percent HFC-245eb. Also of particular note are azeotropic and azeotrope-like compositions containing from about 5 to about 95 weight percent E-HFO-1438mzz and from about 5 to about 95 weight percent HFC-245eb. Also of particular note are azeotropic and azeotrope-like compositions containing from about 5 to about 60 weight percent E-HFO-1438mzz and from about 40 to about 95 weight percent HFC-245eb. Also of particular note are azeotropic and azeotrope-like compositions containing from about 35 to about 60 weight percent E-HFO-1438mzz and from about 40 to about 65 weight percent HFC-245eb.

Of particular utility in the method converting heat to mechanical energy are those embodiments wherein the working fluid consists essentially of E-HFO-1438mzz and optionally HFC-245eb. Also of particular utility are those embodiments wherein the working fluid is azeotropic or azeotrope-like.

Also of particular utility in the method converting heat to mechanical energy are those embodiments wherein the working fluid has a low GWP. Compositions for use in the method for producing heat will have GWP less than 150 when the amount of E-HFO-1438mzz is at least 54 weight percent.

In one embodiment, the present invention relates to a method for converting heat from a heat source to mechanical energy using a sub-critical cycle. This method comprises the following steps:
(a) compressing a liquid working fluid to a pressure below its critical pressure;
(b) heating compressed liquid working fluid from (a) using heat supplied by the heat source to form vapor working fluid;
(c) expanding heated working fluid from (b) to lower the pressure of the working fluid and generate mechanical energy;
(d) cooling expanded working fluid from (c) to form a cooled liquid working fluid; and
(e) cycling cooled liquid working fluid from (d) to (a) for compression.

Embodiments including use of one or more internal heat exchangers (e.g., a recuperator), and/or use of more than one cycle in a cascade system are intended to fall within the scope of the sub-critical ORC power cycles of the present invention.

In one embodiment, the present invention relates to a method for converting heat from a heat source to mechanical energy using a trans-critical cycle. This method comprises the following steps:
(a) compressing a liquid working fluid above said working fluid's critical pressure;
(b) heating compressed working fluid from (a) using heat supplied by the heat source;
(c) expanding heated working fluid from (b) to lower the pressure of the working fluid below its critical pressure and generate mechanical energy;
(d) cooling expanded working fluid from (c) to form a cooled liquid working fluid; and
(e) cycling cooled liquid working fluid from (d) to (a) for compression.

In the first step of the trans-critical Organic Rankine Cycle (ORC) system, described above, the working fluid in liquid phase comprising E-HFO-1438mzz and optionally HFC-245eb is compressed to above its critical pressure. In a second step, said working fluid is passed through a heat exchanger to be heated to a higher temperature before the fluid enters the expander wherein said heat exchanger is in thermal communication with said heat source. The heat exchanger receives heat energy from the heat source by any known means of thermal transfer. The ORC system working fluid circulates through the heat supply heat exchanger where it gains heat.

In the next step, at least a portion of the heated working fluid is removed from said heat exchanger and is routed to the expander where the expansion process results in conversion of at least portion of the heat energy content of the working fluid into mechanical shaft energy. The shaft energy can be used to do any mechanical work by employing conventional arrangements of belts, pulleys, gears, transmissions or similar devices depending on the desired speed and torque required. In one embodiment, the shaft can also be connected to an electric power-generating device such as an induction generator. The electricity produced can be used locally or delivered to the grid. The pressure of the working fluid is reduced to below critical pressure of said working fluid, thereby producing vapor phase working fluid.

In the next step, the working fluid is passed from the expander to a condenser, wherein the vapor phase working fluid is condensed to produce liquid phase working fluid. The above steps form a loop system and can be repeated many times.

Embodiments including use of one or more internal heat exchangers (e.g., a recuperator), and/or use of more than one cycle in a cascade system are intended to fall within the scope of the trans-critical ORC power cycles of the present invention.

Additionally, for a trans-critical organic Rankine cycle, there are several different modes of operation.

In one mode of operation, in the first step of a trans-critical organic Rankine cycle, the working fluid is compressed above the critical pressure of the working fluid substantially isentropically. In the next step, the working fluid is heated under a constant pressure (isobaric) condition to above its critical temperature. In the next step, the working fluid is expanded substantially isentropically at a temperature that maintains the working fluid in the vapor phase. At the end of the expansion the working fluid is a superheated vapor at a temperature below its critical temperature. In the last step of this cycle, the working fluid is cooled and condensed while heat is rejected to a cooling medium. During this step the working fluid condensed to a liquid. The working fluid could be subcooled at the end of this cooling step.

In another mode of operation of a trans-critical ORC power cycle, in the first step, the working fluid is compressed above the critical pressure of the working fluid, substantially isentropically. In the next step the working fluid is then heated under a constant pressure condition to above its critical temperature, but only to such an extent that in the next step, when the working fluid is expanded substantially isentropically, and its temperature is reduced, the working fluid is close enough to the conditions for a saturated vapor that partial condensation or misting of the working fluid may occur. At the end of this step, however, the working fluid is still a slightly superheated vapor. In the last step, the working fluid is cooled and condensed while heat is rejected to a cooling medium. During this step the working fluid condensed to a liquid. The working fluid could be subcooled at the end of this cooling/condensing step.

In another mode of operation of a trans-critical ORC power cycle, in the first step, the working fluid is compressed above the critical pressure of the working fluid, substantially isentropically. In the next step, the working fluid is heated under a constant pressure condition to a temperature either below or only slightly above its critical temperature. At this stage, the working fluid temperature is such that when the working fluid is expanded substantially isentropically in the next step, the working fluid is partially condensed. In the last step, the working fluid is cooled and fully condensed and heat is rejected to a cooling medium. The working fluid could be subcooled at the end of this step.

While the above embodiments for a trans-critical ORC cycle show substantially isentropic expansions and compressions, and isobaric heating or cooling, other cycles wherein such isentropic or isobaric conditions are not maintained but the cycle is nevertheless accomplished, is within the scope of the present invention.

In one embodiment, the present invention relates to a method for converting heat from a heat source to mechanical energy using a super-critical cycle. This method comprises the following steps:
(a) compressing a working fluid from a pressure above its critical pressure to a higher pressure;
(b) heating compressed working fluid from (a) using heat supplied by the heat source;
(c) expanding heated working fluid from (b) to lower the pressure of the working fluid to a pressure above its critical pressure and generate mechanical energy;
(d) cooling expanded working fluid from (c) to form a cooled working fluid above its critical pressure; and
(e) cycling cooled liquid working fluid from (d) to (a) for compression.

Embodiments including use of one or more internal heat exchangers (e.g., a recuperator), and/or use of more than one cycle in a cascade system are intended to fall within the scope of the super-critical ORC power cycles of the present invention.

Typically, in the case of sub-critical Rankine cycle operation, most of the heat supplied to the working fluid is supplied during the evaporation of the working fluid. As a result the working fluid temperature is essentially constant during the transfer of heat from the heat source to the working fluid. In contrast, the working fluid temperature can vary when the fluid is heated isobarically without phase change at a pressure above its critical pressure. Accordingly, when the heat source temperature varies, the use of a fluid above its critical pressure to extract heat from a heat source allows better matching between the heat source temperature and the working fluid temperature compared to the case of sub-critical heat extraction. As a result, the efficiency of the heat exchange process in a super-critical cycle or a trans-critical cycle is often higher than that of the sub-critical cycle (see Chen et al, Energy, 36, (2011) 549-555 and references therein).

The critical temperature and pressure of E-HFO-1438mzz are 149.81°C and 2.17 MPa, respectively. The critical temperature and pressure of HFC-245eb are 165.6°C and 3.06 MPa, respectively. Use of E-HFO-1438mzz or mixtures thereof with HFC-245eb as a working fluid can enable Rankine cycles that receive heat from heat sources with temperatures higher than the critical temperature thereof in a super-critical cycle or a trans-critical cycle. Higher temperature heat sources lead to higher cycle energy efficiencies and volumetric capacities for power generation (relative to lower temperature heat sources). When heat is received using a working fluid above its critical temperature, a fluid heater having a specified pressure and exit temperature (essentially equal to the expander inlet temperature) is used instead of the evaporator (or boiler) used in the conventional sub-critical Rankine cycle.

Of note are methods for converting heat from a heat source to mechanical energy wherein the working fluid comprises or consists essentially of E-HFO-1438mzz and optionally HFC-245eb.

Also of note are methods for converting heat from a heat source to mechanical energy wherein the working fluid comprises or consists essentially of E-HFO-1438mzz.

Working fluids comprising mixtures of E-HFO-1438mzz and HFC-245eb with GWP less than 150 and non-flammable mixtures of E-HFO-1438mzz and HFC-245eb are desirable for use in power cycles.

In one embodiment of the above methods, the efficiency of converting heat to mechanical energy (cycle efficiency) is at least about 2%. In a suitable embodiment, the efficiency can be selected from the following:
about 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, 20.5, 21, 21.5, 22, 22.5, 23, 23.5, 24, 24.5, and about 25%.

In another embodiment, the efficiency is selected from a range that has endpoints (inclusive) as any two efficiency numbers supra.

Typically for sub-critical cycles, the temperature to which the working fluid is heated using heat from the heat source is in the range of from about 50°C to less than the critical temperature of the working fluid, preferably from about 80°C to less than the critical temperature of the working fluid, more preferably from about 125°C to less than the critical temperature of the working fluid. Typically for trans-critical and super-critical cycles, the temperature to which the working fluid is heated using heat from the heat source is in the range of from above the critical temperature of the working fluid to about 400°C, preferably from above the critical temperature of the working fluid to about 300°C, more preferably from above the critical temperature of the working fluid to 250°C.

In a suitable embodiment, the temperature of operation at the expander inlet can be any one of the following temperatures or within the range (inclusive) defined by any two numbers below:
about 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 122, 123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, and about 163, 164, 165, 166, 167, 168, 169, 170, 171, 172, 173, 174, 175, 176, 177, 178, 179, 180, 181, 182, 183, 184, 185, 186, 187, 188, 189, 190, 191, 192, 193, 194, 195, 196, 197, 198, 199, 200, 201, 202, 203, 204, 205, 206, 207, 208, 209, 210, 211, 212, 213, 214, 215, 216, 217, 218, 219, 220, 221, 222, 223, 224, 225, 226, 227, 228, 229, 230, 231, 232, 233, 234, 235, 236, 237, 238, 239, 240, 241, 242, 243, 244, 245, 246, 247, 248, 249, 250, 251, 252, 253, 254, 255, 256, 257, 258, 259, 260, 261, 262, 263, 264, 265, 266, 267, 268, 269, 270, 271, 272, 273, 274, 275, 276, 277, 278, 279, 280, 281, 282, 283, 284, 285, 286, 287, 288, 289, 290, 291, 292, 293, 294, 295, 296, 297, 298, 299, 300, 301, 302, 303, 304, 305, 306, 307, 308, 309, 310, 311, 312, 313, 314, 315, 316, 317, 318, 319, 320, 321, 323, 323, 324, 325, 326, 327, 328, 329, 330, 331, 323, 333, 334, 335, 336, 337, 338, 339, 340, 341, 342, 343, 344, 345, 346, 347, 348, 349, 350, 351, 352, 353, 354, 355, 356, 357, 358, 359, 360, 361, 362, 363, 364, 365, 366, 367, 368, 369, 370, 371, 372, 373, 374, 375, 376, 377, 378, 379, 380, 381, 382, 383, 384, 385, 386, 387, 388, 389, 390, 391, 392, 393, 394, 395, 396, 397, 398, 399, 400°C.

The pressure of the working fluid in the expander is reduced from the expander inlet pressure to the expander outlet pressure. Typical expander inlet pressures for super-critical cycles are within the range of from about 5 MPa to about 15 MPa, preferably from about 5 MPa to about 10 MPa, and more preferably from about 5 MPa to about 8 MPa. Typical expander outlet pressures for super-critical cycles are within 1 MPa above the critical pressure.

Typical expander inlet pressures for trans-critical cycles are within the range of from about the critical pressure to about 15 MPa, preferably from about the critical pressure to about 10 MPa, and more preferably from about the critical pressure to about 5 MPa. Typical expander outlet pressures for trans-critical cycles are within the range of from about 0.025 MPa to about 1.60 MPa, more typically from about 0.05 MPa to about 1.10 MPa, more typically from about 0.10 MPa to about 0.60 MPa.

Typical expander inlet pressures for sub-critical cycles are within the range of from about 0.25 MPa to about 0.1 MPa below the critical pressure, preferably from about 0.5 MPa to about 0.1 MPa below the critical pressure, and more preferably from about 1 MPa to about 0.1 MPa below the critical pressure. Typical expander outlet pressures for sub-critical cycles are within the range of from about 0.025 MPa to about 1.60 MPa, more typically from about 0.05 MPa to about 1.10 MPa, more typically from about 0.10 MPa to about 0.60 MPa.

The cost of a power cycle apparatus can increase when design for higher pressure is required. Accordingly, there is generally at least an initial cost advantage to limiting the maximum cycle operating pressure. Of note are cycles where the maximum operating pressure (typically present in the working fluid heater or evaporator and the expander inlet) does not exceed 2.2 MPa.

The working fluids of the present invention may be used in an ORC system to generate mechanical energy from heat extracted or received from relatively low temperature heat sources such as low pressure steam, industrial waste heat, solar energy, geothermal hot water, low-pressure geothermal steam (primary or secondary arrangements), or distributed power generation equipment utilizing fuel cells or prime movers such as turbines, microturbines, or internal combustion engines. One source of low-pressure steam could be the process known as a binary geothermal Rankine cycle. Large quantities of low-pressure steam can be found in numerous locations, such as in fossil fuel powered electrical generating power plants.

Of note are sources of heat including waste heat recovered from gases exhausted from mobile internal combustion engines (e.g. truck or rail Diesel engines), waste heat from exhaust gases from stationary internal combustion engines (e.g. stationary Diesel engine power generators), waste heat from fuel cells, heat available at Combined Heating, Cooling and Power or District Heating and Cooling plants, waste heat from biomass fueled engines, heat from natural gas or methane gas burners or methane-fired boilers or methane fuel cells (e.g. at distributed power generation facilities) operated with methane from various sources including biogas, landfill gas and coal-bed methane, heat from combustion of bark and lignin at paper/pulp mills, heat from incinerators, heat from low pressure steam at conventional steam power plants (to drive "bottoming" Rankine cycles), and geothermal heat.

Also of note are sources of heat including solar heat from solar panel arrays including parabolic solar panel arrays, solar heat from Concentrated Solar Power plants, heat removed from photovoltaic (PV) solar systems to cool the PV system to maintain a high PV system efficiency.

Also of note are sources of heat including at least one operation associated with at least one industry selected from the group consisting of: oil refineries, petrochemical plants, oil and gas pipelines, chemical industry, commercial buildings, hotels, shopping malls, supermarkets, bakeries, food processing industries, restaurants, paint curing ovens, furniture making, plastics molders, cement kilns, lumber kilns, calcining operations, steel industry, glass industry, foundries, smelting, air-conditioning, refrigeration, and central heating.

In one embodiment of the Rankine cycles of this invention, geothermal heat is supplied to the working fluid circulating above ground (e.g. binary cycle geothermal power plants). In another embodiment of the Rankine cycles of this invention, the working fluid is used both as the Rankine cycle working fluid and as a geothermal heat carrier circulating underground in deep wells with the flow largely or exclusively driven by temperature-induced fluid density variations, known as "the thermosyphon effect" (e.g. see Davis, A. P. and E. E. Michaelides: "Geothermal power production from abandoned oil wells", Energy, 34 (2009) 866-872; Matthews, H. B. United States Patent 4,142,108 - Feb. 27, 1979)

In other embodiments, the present invention also uses other types of ORC systems, for example, small scale (e.g. 1 - 500 kw, preferably 5-250 kw) Rankine cycle systems using micro-turbines or small size positive displacement expanders (e.g. Tahir, Yamada and Hoshino: "Efficiency of compact organic Rankine cycle system with rotary-vane-type expander for low-temperature waste heat recovery", Int'l. J. of Civil and Environ. Eng 2:1 2010), combined, multistage, and cascade Rankine Cycles, and Rankine Cycle systems with recuperators to recover heat from the vapor exiting the expander.

Other sources of heat include at least one operation associated with at least one industry selected from the group consisting of: oil refineries, petrochemical plants, oil and gas pipelines, chemical industry, commercial buildings, hotels, shopping malls, supermarkets, bakeries, food processing industries, restaurants, paint curing ovens, furniture making, plastics molders, cement kilns, lumber kilns, calcining operations, steel industry, glass industry, foundries, smelting, air-conditioning, refrigeration, and central heating.

### Power Cycle Apparatus

In accordance with this invention, a power cycle apparatus for converting heat to mechanical energy is provided. The apparatus contains a working fluid comprising E-HFO-1438mzz. Typically, the apparatus of this invention includes a heat exchange unit where the working fluid can be heated and an expander where mechanical energy can be generated by expanding the heated working fluid by lowering its pressure. Expanders include turbo or dynamic expanders, such as turbines, and positive displacement expanders, such as screw expanders, scroll expanders, piston expanders and rotary vane expanders. Mechanical power can be used directly (e.g. to drive a compressor) or be converted to electrical power through the use of electrical power generators. Typically the apparatus also includes a working fluid cooling unit (e.g., condenser or heat exchanger) for cooling the expanded working fluid and a compressor for compressing the cooled working fluid.

In one embodiment, the power cycle apparatus of the present invention comprises (a) a heat exchange unit; (b) an expander in fluid communication with the heat exchange unit; (c) a working fluid cooling unit in fluid communication with the expander; and (d) a compressor in fluid communication with the working fluid cooler; wherein the compressor is further being in fluid communication with the heat exchange unit such that the working fluid then repeats flow through components (a), (b), (c) and (d) in a repeating cycle; wherein the working fluid comprises E-HFO-1438mzz and optionally HFC-245eb.

In one embodiment, the power cycle apparatus uses a working fluid comprising E-HFO-1438mzz and optionally HFC-245eb. Of note are working fluids that consist essentially of E-HFO-1438mzz and optionally HFC-245eb, wherein the amount of E-HFO-1438mzz is at least about 1 weight percent. Also of note are working fluid compositions consisting essentially of E-HFO-1438mzz. Of particular note are working fluids consisting essentially of E-HFO-1438mzz and HFC-245eb. Also of particular note are working fluids comprising from about 1 weight percent to about 99 weight percent E-HFO-1438mzz and from about 99 weight percent to about 1 weight percent HFC-245eb.

Of note for use in power cycle apparatus are compositions comprising E-HFO-1438mzz and HFC-245eb that are non-flammable. Certain compositions comprising E-HFO-1438mzz and HFC-245eb are non-flammable by standard test ASTM 681. Of particular note are compositions containing E-HFO-1438mzz and HFC-245eb with at least 35 weight percent E-HFO-1438mzz. Also of particular note are compositions containing E-HFO-1438mzz and HFC-245eb with at least 36 weight percent E-HFO-1438mzz. Also of particular note are compositions containing E-HFO-1438mzz and HFC-245eb with at least 37 weight percent E-HFO-1438mzz. Also of particular note are compositions containing E-HFO-1438mzz and HFC-245eb with at least 38 weight percent E-HFO-1438mzz. Also of particular note are compositions containing E-HFO-1438mzz and HFC-245eb at least 39 weight percent E-HFO-1438mzz. Also of particular note are compositions containing E-HFO-1438mzz and HFC-245eb at least 40 weight percent E-HFO-1438mzz.

Of particular note, for use in power cycle apparatus, are compositions containing from about 35 to about 95 weight percent E-HFO-1438mzz and from about 5 to about 65 weight percent HFC-245eb. Also of particular note, for use in power cycle apparatus, are azeotropic and azeotrope-like compositions containing from about 5 to about 95 weight percent E-HFO-1438mzz and from about 5 to about 95 weight percent HFC-245eb. Also of particular note, for use in power cycle apparatus, are azeotropic and azeotrope-like compositions containing from about 5 to about 60 weight percent E-HFO-1438mzz and from about 40 to about 95 weight percent HFC-245eb. Also of particular note, for use in power cycle apparatus, are azeotropic and azeotrope-like compositions containing from about 35 to about 60 weight percent E-HFO-1438mzz and from about 40 to about 65 weight percent HFC-245eb.

Of particular utility in the power cycle apparatus are those embodiments wherein the working fluid consists essentially of E-HFO-1438mzz and optionally HFC-245eb. Also of particular utility are those embodiments wherein the refrigerant is azeotropic or azeotrope-like.

Also of particular utility in the power cycle apparatus are those embodiments wherein the working fluid has a low GWP. Compositions for use in the method for producing heat will have GWP less than 150 when the amount of E-HFO-1438mzz is at least 54 weight percent.

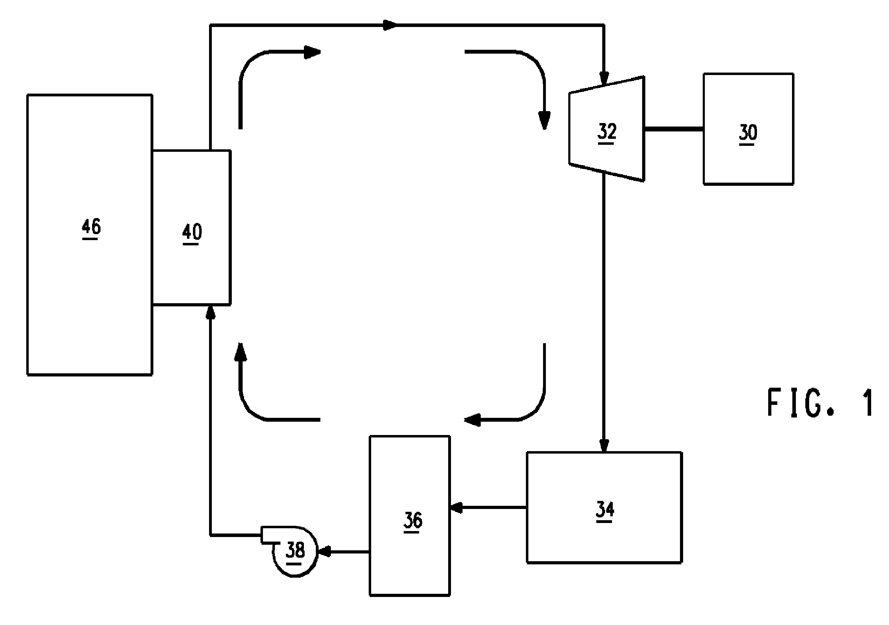

FIG. 1 shows a schematic of one embodiment of the ORC system for using heat from a heat source. Heat supply heat exchanger **40** transfers heat supplied from heat source **46** to the working fluid entering heat supply heat exchanger **40** in liquid phase. Heat supply heat exchanger **40** is in thermal communication with the source of heat (the communication may be by direct contact or another means). In other words, heat supply heat exchanger **40** receives heat energy from heat source **46** by any known means of thermal transfer. The ORC system working fluid circulates through heat supply heat exchanger **40** where it gains heat. At least a portion of the liquid working fluid converts to vapor in heat supply heat exchanger (an evaporator, in some cases) **40.**

The working fluid now in vapor form is routed to expander **32** where the expansion process results in conversion of at least a portion of the heat energy supplied from the heat source into mechanical shaft power. The shaft power can be used to do any mechanical work by employing conventional arrangements of belts, pulleys, gears, transmissions or similar devices depending on the desired speed and torque required. In one embodiment, the shaft can also be connected to electric power-generating device **30** such as an induction generator. The electricity produced can be used locally or delivered to a grid.

The working fluid still in vapor form that exits expander **32** continues to condenser **34** where adequate heat rejection causes the fluid to condense to liquid.

It is also desirable to have liquid surge tank **36** located between condenser **34** and pump **38** to ensure there is always an adequate supply of working fluid in liquid form to the pump suction. The working fluid in liquid form flows to pump **38** that elevates the pressure of the fluid so that it can be introduced back into heat supply heat exchanger **40** thus completing the Rankine cycle loop.

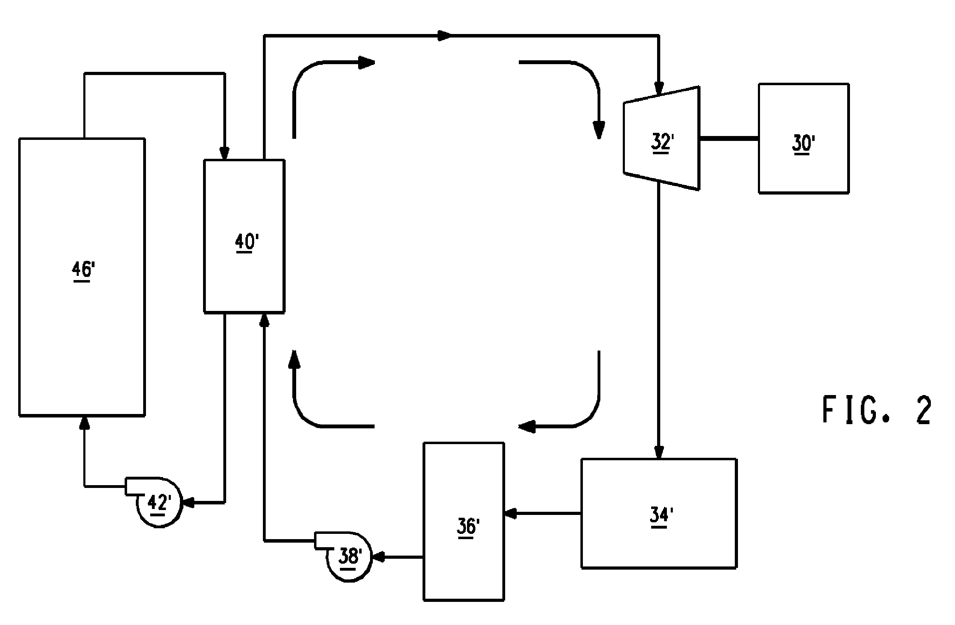

In an alternative embodiment, a secondary heat exchange loop operating between the heat source and the ORC system can also be used. In FIG. 2, an organic Rankine cycle system is shown, in particular for a system using a secondary heat exchange loop. The main organic Rankine cycle operates as described above for FIG. 1. The secondary heat exchange loop is shown in FIG. 2 as follows: the heat from heat source **46'** is transported to heat supply heat exchanger **40'** using a heat transfer medium (i.e., secondary heat exchange loop fluid). The heat transfer medium flows from heat supply heat exchanger **40'** to pump **42'** that pumps the heat transfer medium back to heat source **46'.** This arrangement offers another means of removing heat from the heat source and delivering it to the ORC system. This arrangement provides flexibility by facilitating the use of various fluids for sensible heat transfer.

In fact, the working fluids of this invention can be used as secondary heat exchange loop fluids provided the pressure in the loop is maintained at or above the fluid saturation pressure at the temperature of the fluid in the loop. Alternatively, the working fluids of this invention can be used as secondary heat exchange loop fluids or heat carrier fluids to extract heat from heat sources in a mode of operation in which the working fluids are allowed to evaporate during the heat exchange process thereby generating large fluid density differences sufficient to sustain fluid flow (thermosyphon effect). Additionally, high-boiling point fluids such as glycols, brines, silicones, or other essentially non-volatile fluids may be used for sensible heat transfer in the secondary loop arrangement described. A secondary heat exchange loop can make servicing of either the heat source or the ORC system easier since the two systems can be more easily isolated or separated. This approach can simplify the heat exchanger design as compared to the case of having a heat exchanger with a high mass flow/low heat flux portion followed by a high heat flux/low mass flow portion.

Organic compounds often have an upper temperature limit above which thermal decomposition will occur. The onset of thermal decomposition relates to the particular structure of the chemical and thus varies for different compounds. In order to access a high-temperature source using direct heat exchange with the working fluid, design considerations for heat flux and mass flow, as mentioned above, can be employed to facilitate heat exchange while maintaining the working fluid below its thermal decomposition onset temperature. Direct heat exchange in such a situation typically requires additional engineering and mechanical features which drive up cost. In such situations, a secondary loop design may facilitate access to the high-temperature heat source by managing temperatures while circumventing the concerns enumerated for the direct heat exchange case.

Other ORC system components for the secondary heat exchange loop embodiment are essentially the same as described for FIG. 1. Liquid pump **42** circulates the secondary fluid (e.g., heat transfer medium) through the secondary loop so that it enters the portion of the loop in heat source **46** where it gains heat. The fluid then passes to heat exchanger **40** where the secondary fluid gives up heat to the ORC working fluid.

In one embodiment of the above process, the evaporator temperature (temperature at which heat is extracted by the working fluid) is less than the critical temperature of the working fluid. Included are embodiments wherein the temperature of operation is any one of the following temperatures or within the range (inclusive) defined by any two numbers below:
about 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110,111,112,113,114,115,116,117,118,119,120,121,122,123, 124, 125, 126, 127, 128, 129, 130, 131, 132, 133, 134, 135, 136, 137, 138, 139, 140, 141, 142, 143, 144, 145, 146, 147, 148, 149, 150, 151, 152, 153, 154, 155, 156, 157, 158, 159, 160, 161, 162, 163, 164, and about 165°C.

In one embodiment of the above process, the evaporator operating pressure is less than about 2.17 MPa [what should this limit be? Was 3.06 for 245eb and optional 1336mzz]. Included are embodiments wherein the pressure of operation is any one of the following pressures or within the range (inclusive) defined by any two numbers below:
about 0.15, 0.2, 0. 25, 0.3, 0.35, 0.4, 0.45, 0.5, 0.55, 0.6, 0.65, 0.7, 0.75, 0.8, 0.85, 0.9, 0.95, 1.00, 1.05, 1.10, 1.15, 1.20, 1.25, 1.30, 1.35, 1.40, 1.45, 1.50, 1.55, 1.60, 1.65, 1.70, 1.75, 1.80, 1.85, 1.90, 1.95, 2.00, 2.05, 2.10, 2.15, 2.20, 2.25, 2.30, 2.35, 2.40, 2.45, 2.50, 2.55, 2.60, 2.65, 2.70, 2.75, 2.80, 2.85, 2.90, 2.95, 3.00, 3.05 and about 3.06 MPa.

The use of low cost equipment components substantially expands the practical viability of organic Rankine cycles (see Joost J. Brasz, Bruce P. Biederman and Gwen Holdmann: "Power Production from a Moderate-Temperature Geothermal Resource", GRC Annual Meeting, September 25-28th, 2005; Reno, NV, USA). For example, limiting the maximum evaporating pressure to about 2.2 MPa would allow the use of low-cost equipment components of the type widely used in the HVAC industry.

Of particular note are power cycle apparatus containing a working fluid comprising or consisting essentially of E-HFO-1438mzz and optionally HFC-245eb.

Also of particular note are power cycle apparatus containing a working fluid comprising or consisting essentially of E-HFO-1438mzz.

Also of particular note are power cycle apparatus containing a working fluid comprising or consisting essentially of E-HFO-1438mzz and HFC-245eb.

Of particular utility are working fluids comprising mixtures of E-HFO-1438mzz and HFC-245eb with GWP less than 150 and non-flammable mixtures of E-HFO-1438mzz and HFC-245eb are desirable for use in power cycle apparatus.

The apparatus may include molecular sieves to aid in removal of moisture. Desiccants may be composed of activated alumina, silica gel, or zeolite-based molecular sieves. In some embodiments, the molecular sieves are most useful with a pore size of approximately 3 Angstroms, 4 Angstroms, or 5 Angstroms. Representative molecular sieves include MOLSIV XH-7, XH-6, XH-9 and XH-11 (UOP LLC, Des Plaines, IL).

### Power Cycle Compositions

The compositions comprising E-HFO-1438mzz and optionally HFC-245eb that are particularly useful in power cycles including organic Rankine cycles are azeotropic or azeotrope-like.

It has been disclosed that E-HFO-1438mzz and HFC-245eb form azeotropic and azeotrope-like compositions in U.S. Provisional Patent Application serial no. 61/439,389, filed February 4, 2011 (now published as PCT International Patent Application Publication No. WO2012/106656, published August 9, 2012).

Azeotropic compositions will have zero glide in the heat exchangers, e.g., evaporator and condenser, of a power cycle apparatus.

Of note for use as working fluids in power cycles are compositions comprising E-HFO-1438mzz and HFC-245eb that are non-flammable. It is expected that certain compositions comprising E-HFO-1438mzz and HFC-245eb are non-flammable by standard test ASTM 681. Of particular note are compositions containing E-HFO-1438mzz and HFC-245eb with at least 35 weight percent E-HFO-1438mzz. Also of particular note are compositions containing E-HFO-1438mzz and HFC-245eb with at least 36 weight percent E-HFO-1438mzz. Also of particular note are compositions containing E-HFO-1438mzz and HFC-245eb with at least 37 weight percent E-HFO-1438mzz. Also of particular note are compositions containing E-HFO-1438mzz and HFC-245eb with at least 38 weight percent E-HFO-1438mzz. Also of particular note are compositions containing E-HFO-1438mzz and HFC-245eb at least 39 weight percent E-HFO-1438mzz. Also of particular note are compositions containing E-HFO-1438mzz and HFC-245eb at least 40 weight percent E-HFO-1438mzz.

Of particular utility as working fluids in power cycles are those embodiments wherein the working fluid consists essentially of E-HFO-1438mzz and optionally HFC-245eb. Also of particular utility are those embodiments wherein the refrigerant is azeotropic or azeotrope-like.

Also of particular utility as working fluids in power cycles are those embodiments wherein the working fluid has a low GWP. Compositions for use in the method for producing heat will have GWP less than 150 when the amount of E-HFO-1438mzz is at least 54 weight percent.

Additionally, non-flammable working fluids may be desirable as working fluids for the methods of converting heat from a heat source to mechanical energy.

Any of the compositions may also comprise at least one lubricant suitable for use at a temperature of at least about 50°C. Of note are compositions comprising at least one lubricant suitable for use at a temperature within the range of from about 150°C to about 400°C. Included are compositions comprising at least one lubricant suitable for use at a temperature within the range of from about 150°C to about 300°C; and compositions comprising at least one lubricant suitable for use at a temperature within the range of from about 175°C to about 250°C. Of particular note are lubricant containing-compositions described above wherein the working fluid consists essentially of E-HFO-1438mzz. The compositions of this invention may also include other components such as stabilizers, compatibilizers and tracers.

### EXAMPLES

The concepts described herein will be further described in the following examples, which do not limit the scope of the invention described in the claims.

### Example 1

### Power generation from heat through sub-critical Rankine cycles operating with neat E-HFO-1438mzz as the working fluid

Heat available at relatively low temperatures can be used to generate mechanical power through Rankine cycles using E-HFO-1438mzz as the working fluid. Mechanical power can be used directly (e.g. to drive a compressor) or be converted to electrical power through the use of electrical power generators. Table 1 summarizes the expected performance of a Rankine cycle using E-HFO-1438mzz as the working fluid to convert available heat, supplied to an evaporator operating at 130°C, under the following conditions:

| | |
|---|---|
| Evaporator Temperature | = 130°C |
| Condenser Temperature | = 40.0°C |
| Pump Efficiency | = 0.85 |
| Expander Efficiency | = 0.85 |
| Superheat | = 0.0°C |
| Subcooling | = 0.0°C |

**TABLE 1**

| | |
|---|---|
| Evaporator Pressure | 1,546 kPa |
| Condenser Pressure | 150 kPa |
| Thermal Efficiency | 0.124 |
| Volumetric Capacity for Power Generation | 257 kJ/m³ |

E-HFO-1438mzz enables good performance while offering no flammability and attractive environmental properties (i.e no ODP and low GWP).

### Example 2

### Power generation from heat through trans-critical Rankine cycles operating with neat E-HFO-1438mzz as the working fluid

Use of E-HFO-1438mzz can enable Rankine cycles that collect heat from heat sources with temperatures higher than about 150 °C using E-HFO-1438mzz as the working fluid in a super-critical cycle or a trans-critical cycle. Higher temperature heat sources lead to higher cycle energy efficiencies and volumetric capacities for power generation (relative to lower temperature heat sources). When heat collection is carried out using a working fluid above its critical temperature, a fluid heater having a specified pressure and exit temperature (essentially equal to the expander inlet temperature) is used instead of the evaporator (or boiler) used in the conventional sub-critical Rankine cycle.

Table 2 shows performance for a Rankine cycle first heating E-HFO-1438mzz at 3 MPa to 180°C, then expanding the heated E-HFO-1438mzz to the operating pressure of the condenser at T_{cond}=40°C.

| | |
|---|---|
| Supercritical Fluid Heater Pressure | = 3 MPa |
| Evaporator Temperature | = 130°C |
| Condenser Temperature | = 40.0°C |
| Pump Efficiency | = 0.85 |
| Expander Efficiency | = 0.85 |
| Superheat | = 0.0°C |
| Subcooling | = 0.0°C |

**TABLE 2**

| | |
|---|---|
| Cycle Efficiency | 0.139 |
| Volumetric Capacity for Power Generation | 313 kJ/m³ |

### Example 3

### Power Generation through Rankine Cycle with an E-HFO-1438mzz/HFC-245eb (35/65 wt%) Blend as the Working Fluid

Table 3 summarizes the expected performance of a Rankine cycle using E-HFO-1438mzz/HFC-245eb (35/65 wt%) blend (Blend B) as the working fluid to convert available heat as compared to HFC-245fa, supplied to an evaporator operating at 135°C, under the following conditions:

| | |
|---|---|
| Evaporator Temperature | = 135°C |
| Condenser Temperature | = 40.0°C |
| Pump Efficiency | = 0.70 |
| Expander Efficiency | = 0.80 |
| Superheat (evap) | = 0.0°C |
| Subcooling (cond) | = 0.0°C |

**TABLE 3**

| | Blend B | HFC-245fa |
|---|---|---|
| GWP | 197 | 1030 |
| Evaporator Pressure (kPa) | 2,163 | 2,576 |
| Condenser Pressure (kPa) | 199 | 250 |
| Thermal Efficiency | 0.130 | 0.130 |
| Volumetric Capacity for Power Generation (kJ/m³) | 327 | 395 |

Table 3 shows that an E-HFO-1438mzz/HFC-245eb (35/65 wt%) blend (Blend B) could enable a Rankine cycle with performance comparable to that of HFC-245fa. An E-HFO-1438mzz/HFC-245eb (35/65 wt%) blend would have a GWP substantially lower than that of HFC-245fa and would most likely be non-flammable. No evaporator superheat is required with a E-HFO-1438mzz/HFC-245eb (35/65 wt%) blend to ensure dry expansion.

## Claims

1. A method for converting heat from a heat source to mechanical energy, comprising heating a working fluid comprising E-1,1,1,4,4,5,5,5-octafluoro-2-pentene (E-HFO-1438mzz) using heat supplied from the heat source; and expanding the heated working fluid to lower the pressure of the working fluid and generate mechanical energy as the pressure of the working fluid is lowered.

2. The method of claim 1, wherein the working fluid is compressed prior to heating; and the expanded working fluid is cooled and compressed for repeated cycles.

3. The method of claim 2 wherein heat from a heat source is converted to mechanical energy using a sub-critical cycle comprising:
(a) compressing a liquid working fluid to a pressure below its critical pressure;
(b) heating compressed liquid working fluid from (a) using heat supplied by the heat source to form vapor working fluid;
(c) expanding heated working fluid from (b) to lower the pressure of the working fluid and generate mechanical energy;
(d) cooling expanded working fluid from (c) to form a cooled liquid working fluid; and
(e) cycling cooled liquid working fluid from (d) to (a) for compression.

4. The method of claim 2 wherein heat from a heat source is converted to mechanical energy using a trans-critical cycle comprising:
(a) compressing a liquid working fluid above said working fluid's critical pressure;
(b) heating compressed working fluid from (a) using heat supplied by the heat source;
(c) expanding heated working fluid from (b) to lower the pressure of the working fluid below its critical pressure and generate mechanical energy;
(d) cooling expanded working fluid from (c) to form a cooled liquid working fluid; and
(e) cycling cooled liquid working fluid from (d) to (a) for compression.

5. The method of claim 2 wherein heat from a heat source is converted to mechanical energy using a super-critical cycle comprising:
(a) compressing a working fluid from a pressure above its critical pressure to a higher pressure;
(b) heating compressed working fluid from (a) using heat supplied by the heat source;
(c) expanding heated working fluid from (b) to lower the pressure of the working fluid to a pressure above its critical pressure and generate mechanical energy;
(d) cooling expanded working fluid from (c) to form a cooled working fluid above its critical pressure; and
(e) cycling cooled liquid working fluid from (d) to (a) for compression.

6. A power cycle apparatus containing a working fluid comprising E-HFO-1438mzz.

7. The power cycle apparatus of claim 6 comprising (a) a heat exchange unit; (b) an expander in fluid communication with the heat exchange unit; (c) a working fluid cooling unit in fluid communication with the expander; and (d) a compressor in fluid communication with the working fluid cooler; wherein the compressor is further being in fluid communication with the heat exchange unit such that the working fluid then repeats flow through components (a), (b), (c) and (d) in a repeating cycle.
